# EUROPEAN PATENT APPLICATION

(11) **EP 3 690 752 A1**
(43) Date of publication of application: **05.08.2020**
(21) Application number: 19382063.6
(22) Date of filing: 31.01.2019
(51) Int. Cl.: G06N 3/04, G06N 3/08

(54) **FRACTAL COGNITIVE COMPUTING NODE AND COMPUTER-IMPLEMENTED METHOD FOR LEARNING PROCEDURES**

(71) Applicant: Avatar Cognition Barcelona, SL, 08197 Sant Cugat del Vallès (ES)
(72) Inventor: GUINOVART GRÀCIA, Enric, 08023 Barcelona (ES)
(74) Representative: Juncosa Miró, Jaime

(57) **Abstract**

A fractal cognitive computing node and a computer-implemented method for learning procedures are provided. The FCN comprises a first input to receive a first input signal, a first output to provide a first output signal, a second input to receive a second input signal and a third input signal to receive a SA parameter. A memory of the FCN stores a collection of items and a processing unit implements a function that compares a combination of said first and second input signals with the stored collection of items and calculates a similarity measure for each compared item. The first output signal is calculated as a selection of the compared items having a similarity measure greater than said SA parameter. If the selection is empty, a new item is added to said memory and equals the output to the combination of input signals; and if not empty, equals the output signal to said selection.

## Description

### Technical Field

The present invention is directed, in general, to the automatic learning and processing mechanisms. In particular, the invention relates to a fractal cognitive computing node (FCN) and to a computer-implemented method for learning procedures. The FCN is aimed to provide a computational approach for general cognition as an implementable framework for scalable cognitive solutions and specifically to build Artificial General Intelligence (AGI) architectures. FCN models the essence of the cognition effect which is modulated by specific dynamic parameters.

### Background of the Invention

The cognition definition is used in the context of cognitive science approach and is refers to "any kind of mental operation or structure that can be studied in precise terms". In more generalist way, cognition is defined as follows: *"The mental action or process of acquiring knowledge and understanding through thought, experience, and the senses"*

It is assumed that cognition refers to the processes involved on creating a model of the external world perceived by sensing and interacted by motor effectors, including abstract data transformation processes.

Since cognition is understood as an approximated function of biological systems and, considering that intelligence is an effect produced by specific biological architectures, it can be deducted that intelligence can be implemented based on such cognition design principles.

The general goal of cognition is to produce a model of the world based on external information to the system. The world physics and their dynamics are reflected through specific forms of energy which are sensed through specific sensors. The proper modelling of this information has to process and transform the detected energy based on a specific function which requires that these relationships remain through all signals at any level of the cognitive system.

This implies that cognition preserves the energy relationships in the consequent encoding and clearly differs from the computation based on symbolic transformations.

The use of term "semantic" refers throughout this document to the relationship characteristics between different information entities, and is explicitly not referring to any meaning related to symbols or language processing. This moves cognition to a computational methodology suitable for semantic problem-solving which exhibits completely different information processing features from well-known symbolic computation model.

Based on introduced semantic computation approach, the sensing of external world should preserve the semantic through the encoding process. The process of encoding transforms the sensed energy to a data representation that preserves energy semantics into a resulting signal. This process can be modelled as a sub-set of Sparse Distributed Representations, where the implementation of the sensed value contains and preserves within the encoding the potential relationships between any other sensed value.

Different approaches exist in current cognition models. Deep Learning models are based on a definition of mass of neurons based on the layer concept. The layers are a set of limited number of neurons where there are no connections between them (no internal connectivity). Each of these neurons is widely connected to neurons from and to previous and next layer neurons. Without evaluating the biological plausibility of this definition of layer, the relationship knowledge relies on each neuron set of inputs and associated weights and then, knowledge is stored in layers relationships rather than relationships in a layer.

On the other hand, one can think of a mass of neurons as a set of neurons with high internal connectivity as well as external connections between other masses of neurons. The internal connectivity is the underlying mechanism to capture relationships between different neurons of the same mass in such a way that the fingerprint representing any activation pattern is the knowledge unit to be eventually recalled.

On the other hand, the use of fractality as a problem-solving technique has been used throughout several areas of research. Fractality requires the recursive use of a unique primitive function that is applied at the different positions and levels of the resulting fractal structure, creating an exhaustive computational space exploration method where the primitive is performed. It also means that the cognitive effect has its expression at any level or group of the fractal deployment.

Some patents and/or patent applications are known in the field. For example, US 20150294217A1 discloses methods, systems and computer program products to memorize multiple inputs into an artificial neuron that includes multiple dendrites each having multiple dendrite compartments. Operations include computing coincidence detection as distal synapse activation that flows from more proximal ones of the dendrite compartments to a soma of the artificial neuron, generating a dendritic action potential responsive to the coincidence detection from a non-zero activation value input received at a corresponding one of the dendrite compartments that includes a non-zero receptivity, and responsive to generating the dendritic action potential, decrementing the activation value and the receptivity and passing the decremented activation value to a next one of the dendrite compartments.

US 9239989B2 discloses a computer-implemented system including an edge module and at least one input device coupled to the edge module. The at least one input device is configured to generate data input signals. The system also includes a cognitive module coupled to the edge module. The cognitive module includes a perception sub-module coupled to the edge module. The perception sub-module is configured to receive the data input signals. The cognitive module also includes a learning sub-module coupled to the perception sub-module. The learning sub-module is configured to adaptively learn at least in part utilizing the data input signals.

US 7567889B1 relates to a data processing method, which runs on a data processing device, for mapping input data to be processed onto output data. According to this method: the data objects to be processed are input as input data; the input data objects are processed with aid of a topology-preserving map by the arrangement of neurons according to a predetermined schema in an arrangement space; code book objects in the result space are assigned to the neurons, and; code book objects are processed in accordance with the calculation rule of a topology-preserving map while using data objects of the investigation space. The processed code book objects are output as output data. This invention is characterized in that at least a portion of the input data objects is used in order to determine the arrangement of neurons in the arrangement space and/or in that data objects are input, which are required for data processing, are independent of the input data to be processed, and which are used as data objects of the information space.

### Description of the Invention

Present invention provides, according to one aspect, a fractal cognitive computing node (FCN) for learning procedures. The proposed FCN includes: a first input, to receive a first input signal, said first input signal comprising a set of pairs <key, value>, wherein the key representing an identifier and the value representing a magnitude of the first input signal; a first output, to provide a first output signal, said first output signal comprising a set of pairs <key, value>, wherein the key representing an identifier and the value representing a magnitude of the output signal; a second input, to receive a second input signal, said second input signal being a first output signal of another FCN and comprising a set of pairs <key, value>, wherein the key representing an identifier and the value representing a magnitude of the second input signal; and a third input, to receive a spatial attention (SA) parameter comprising a single dimension value.

According to the invention, the FCN also includes a memory and at least one processing unit. The memory stores a collection of items, each item having a set of tuples <key, value>, and each item representing a previous stored input from at least one of said first or second input signals. The processing unit is adapted to implement a computational function that compares a combination of said first and second input signals to some or all of the stored collection of items and calculates a similarity measure for each compared item.

The first output signal is particularly calculated as a selection of the compared items having a similarity measure greater than the cited SA parameter. In case the selection of compared items is empty, a new item is added to the memory and equals the first output signal to the combination of the first and second input signals. On the contrary, if the selection of compared items is not empty, equals the first output signal to said selection.

In an embodiment, particularly, the FCN further has a second output to provide a confidence (CF) parameter. The CF parameter is computed, by the processing unit, as a statistical grouping function over the similarity measures of the cited selection.

In an embodiment, the FCN further has a fourth input to receive a temporal attention (TA) parameter comprising a single dimension value. The processing unit can modify the values of any pair of items stored in the memory decreasing them by said TA parameter.

Likewise, the FCN may further have a fifth input to receive a conditioning (CD) parameter comprising a single dimension value. In this case, each item stored in the memory comprises a set of tuples <key, value, depth>, and the processing unit can modify the depth value of tuples for the selection of compared items by a magnitude defined as an addition or subtraction of a value of said CD parameter.

In addition, the FCN may further have a sixth input to receive a focus parameter comprising a tuple <target, scope>. The processing unit can modify the value of the set of tuples of at least one item of said collection of items selected by the target and scope values of the focus parameter.

Moreover, the FCN may further have a third output to provide a coherence (CH) parameter. In particular, the CH parameter is computed as a similarity measure between the second input signal and the first output signal by the processing unit.

According to the invention, the first and second input signals and the first output signal can be received/provided in sparse-distributed representation.

In an embodiment, the first input signal is received from another FCN connected thereto. Alternatively, the first input signal is received from a (remote) sensor.

In a particular embodiment, the FCN is connected to one or more different FCNs forming a hierarchical structure.

According to another aspect, present invention also provides a computer-implemented method for learning procedures, the method comprises: receiving, by a first input of a computing node, a first input signal comprising a set of pairs <key, value>, the key representing an identifier and the value representing a magnitude of the first input signal; receiving, by a second input of said computing node, a second input signal comprising a set of pairs <key, value>, the key representing an identifier and the value representing a magnitude of the second input signal, the second input signal being an output signal of another computing node; and receiving, by a third input of the computing node, a SA parameter comprising a single dimension value.

The proposed method also comprises storing, in a memory of the computing node, a collection of items, each item having a set of tuples <key, value> and each representing a previous stored input from at least one of said first or second input signals; and implementing, by a processing unit of the computing node, a computational function that compares a combination of said first and second input signals to some or all of the stored collection of items and calculates a similarity measure for each compared item.

The first output signal is outputted via a first output of the computing node. The first output signal particularly comprises a set of pairs <key, value>, and is calculated as a selection of the compared items having a similarity measure greater than said SA parameter.

In a particular embodiment, the proposed method also comprises computing, by the processing unit, a CF parameter as a statistical grouping function over the similarity measures of said selection. The computed CF parameter is outputted via a second output of the computing node.

In a particular embodiment, the proposed method also comprises receiving, by a fourth input of the computing node, a TA parameter comprising a single dimension value, and modifying, by the processing unit, the values of any pair of items stored in the memory decreasing them by said TA parameter.

In a particular embodiment, the proposed method also comprises receiving, by a fifth input of the computing node, a CD parameter comprising a single dimension value, each item stored in the memory has a set of tuples <key, value, depth>, and modifying, by the processing unit, the depth value of tuples for the selection of compared items by a magnitude defined as an addition or subtraction of a value of said CD parameter.

In a particular embodiment, the proposed method also comprises receiving, by a sixth input of the computing node, a focus parameter comprising a tuple <target, scope>. Then, the processing unit modifies the value of the set of tuples of at least one item of said collection of items selected by the target and scope values of the focus parameter.

In another particular embodiment, the proposed method also comprises computing, by the processing unit, a CH parameter as a similarity measure between the second input signal and the first output signal, and providing the computed CH parameter via a third output of the computing node.

### Brief Description of the Drawings

The previous and other advantages and features will be more fully understood from the following detailed description of embodiments, with reference to the attached figures, which must be considered in an illustrative and non-limiting manner, in which:
Fig. 1 is a conceptual illustration of a fractal cognitive computing node (FCN), according to one embodiment of the present invention.
Fig. 2 is a conceptual illustration of a fractal cognitive computing node (FCN), according to another embodiment of the present invention.
Fig. 3 is a conceptual drawing showing different fractal cognitive computing nodes connected at different levels forming a hierarchical structure, according to an embodiment of the present invention.
Fig. 4 is a flowchart illustrating a method for learning procedures in a computing node such as a FCN, according to an embodiment of the present invention.
Fig. 5 is a conceptual drawing showing an alternative custom hierarchical structure, in this particular case a 2-dimension structure schema.

### Detailed Description of Preferred Embodiments

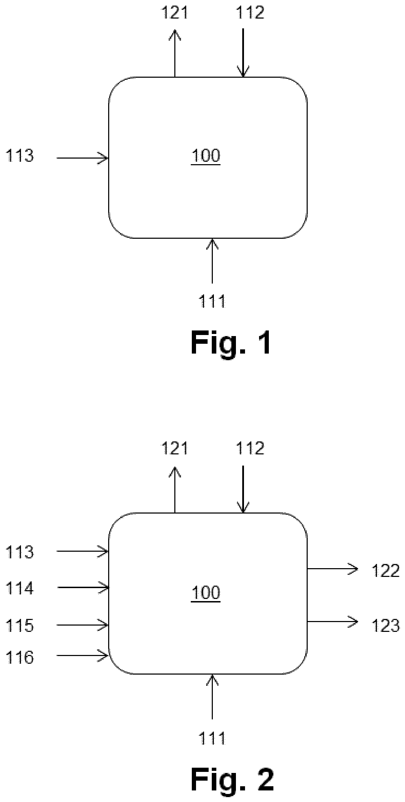

Fig. 1 shows a conceptual illustration of a fractal cognitive computing node (FCN), according to one embodiment of the present invention. The FCN 100 includes a first input 111, a second input 112, a third input 113, a first output 121, a memory and at least one processing unit with one or more processors (not shown for simplicity of the figure).

The first input 111 is configured to receive a first input signal comprising a set of pairs <key, value>, the key representing an identifier and the value representing a magnitude of the first input signal. The first output 121 is configured to provide a first output signal comprising a set of pairs <key, value>, the key representing an identifier and the value representing a magnitude of the output signal. The second input 112 is configured to receive a second input signal being a first output signal of another FCN 100 and comprising a set of pairs <key, value>, the key representing an identifier and the value representing a magnitude of the second input signal. In particular, the first and second input signals and the first output signal are received/provided in sparse-distributed representation (SDR). The first input signal can be received from another FCN 100 (e.g. from a children FCN) in case it is an internal FCN structure or the first input signal can be generated by an encoder sensor if the FCN is a leave of a structure.

The third input 113 is configured to receive a spatial attention (SA) parameter comprising a single dimension value. In particular, the SA parameter defines the threshold which is applied in order to drive learning from new signals and the recalling of learned ones. SA parameter impacts on what is the level of detail of the cognitive step.

The cited memory of the FCN 100 stores a collection of items, where each item has a set of tuples <key, value>, and represents a previous stored input from at least one of said first or second input signals. The processing unit implements the computational function for performing the learning/recalling procedures against all previously learned patterns. To that end, the processing unit compares a combination of said first and second input signals to some (or all) of the stored collection of items (in general of a plurality of interconnected FCNs 100) and calculates a similarity measure for each compared item. The processing unit generates the first output signal as the selection of the compared items having a similarity measure greater than the SA parameter.

Fig. 2 shows a conceptual illustration of a FCN according to another embodiment of the present invention. Besides the features previously described, in this case the FCN 100 also includes a fourth input 114 to receive a temporal attention (TA) parameter, a fifth input 115 to receive a conditioning (CD) parameter, a sixth input 116 to receive a focus parameter, a second output 122 to provide a confidence (CF) parameter and a third output 123 to provide a coherence (CH) parameter. It should be noted that in other embodiments, in this case not illustrated it is not necessary to have all these additional inputs and output but only one of them.

The CF parameter is computed as a statistical grouping function over the similarity measures of the cited selection of compared items. That is, this output parameter shows the value of confidence of recalled pattern delivered in the first output 121.

The TA parameter, which comprises a single dimension value, defines the time range that the cited computational function is applied on. Wider ranges allow the FCN 100 to change the sequence length of pattern processing. When receiving this TA parameter, the processing unit can modify the values of any pair of items stored in the memory decreasing them by TA parameter. On the other hand, the CD parameter, which also comprises a single dimension value, either positive or negative, defines, when positive, a reinforcement level and, when negative, it defines an inhibition level. In this case, each item stored in the memory comprises a set of tuples <key, value, depth>. The processing unit can modify the depth value of tuples for the selection of compared items by a magnitude defined as an addition or subtraction of the value of said CD parameter.

The focus parameter particularly comprises a tuple <target, scope>. The processing unit can modify the value of the set of tuples of at least one item of said collection of items taking into account the target and scope values of the focus parameter.

The CH parameters shows a measure of difference between the second input signal and the first output signal, understood as a measure of success of cognitive function.

According to the invention, the first output signal outputted via the first output 121 can be reduced in size by a percentage set by a redux parameter. This reduction has to be compliant with the semantic perspective, showing the same internal relationships as the original signal filtered by relevance.

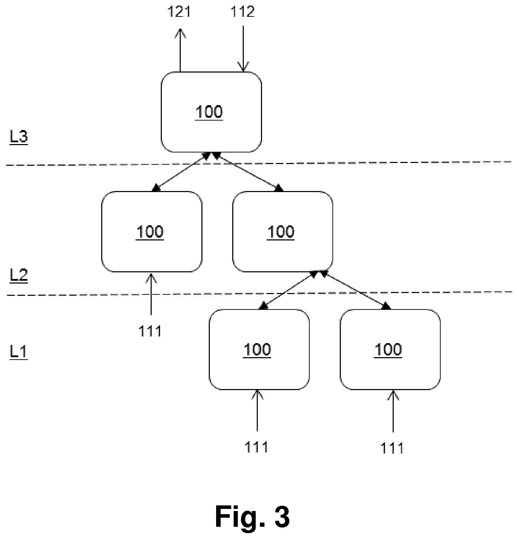

Fig. 3 is a conceptual drawing of different FCNs 100 interconnected at different levels forming a hierarchical structure. In this hierarchical structure the different FCNs 100 learn from each other. Fig. 3 illustrates an example with three different levels L1-L3 of connection. Each of FCNs 100 will implement the computational function for performing the learning/recalling procedures based on their corresponding signals. This make FCNs 100 to learn/recall the most similar previously learned patterns and produce a first output signal containing the pattern recalled/learned. The FCN 100 at the third layer L3 receives in the first input 111 the combination of the two FCNs 100 of the second layer L2. Taking this combination as a single first input signal, the FCN 100 at the third layer L3 will perform the computational function, learning/recalling based on this combined signal.

As a result, this structure creates a first level of knowledge individually for each FCN 100 but at the same time, creates a second level of knowledge as an overall context, with the capability of inferring one to each other. In this structure, a partial stimulation of lowest level will produce that top FCN 100 will produce a first output signal 121 containing the most similar combined pattern, which will be sent to the lower FCNs 100 (children FCNs) via the second input 112. The FCN 100 which is not stimulated will choose the second input signal as input signal and, therefore, will activate original individual pattern.

This advantageously achieves individual cognition for each FCN 100 at lowest level; associative cognition between them at top level; bottom-up and top-down flow of information in the same structure; and continuous learning operational behavior for new data as well as new predicted values.

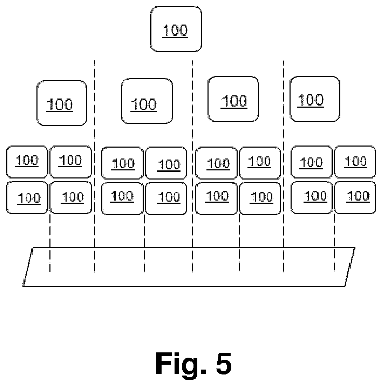

It should be noted that as a derived structure of the principle shown in the basic structure of Fig. 3, custom hierarchical structures can be also defined including 2-dimension structures (i.e. defined based on a 2D space) or any n-dimension or natural structure (i.e. no space arrangement is known, so all possible relationships between dimensions is captured). Fig. 5 shows an example of a 2-dimension structure.

As stated before, each FCN 100 receives a TA parameter. The configuration of the corresponding value can be defined on two different strategies:
- Distribution of the TA values over the different levels of the structure with increasing values of the parameter.
- Fixed values for all the structure and add upper levels with a relationship of 1 to 1 of father-children ratio, each of those with higher TA values.

These two strategies allow performing a sampling of different time range context, performing the computational function over it and delivering full exploration of time dimension. A FCN with higher value than children's one, will receive first input signals which contain the active pattern and complemented with latest activated ones and, therefore, containing the transition of the sequence.

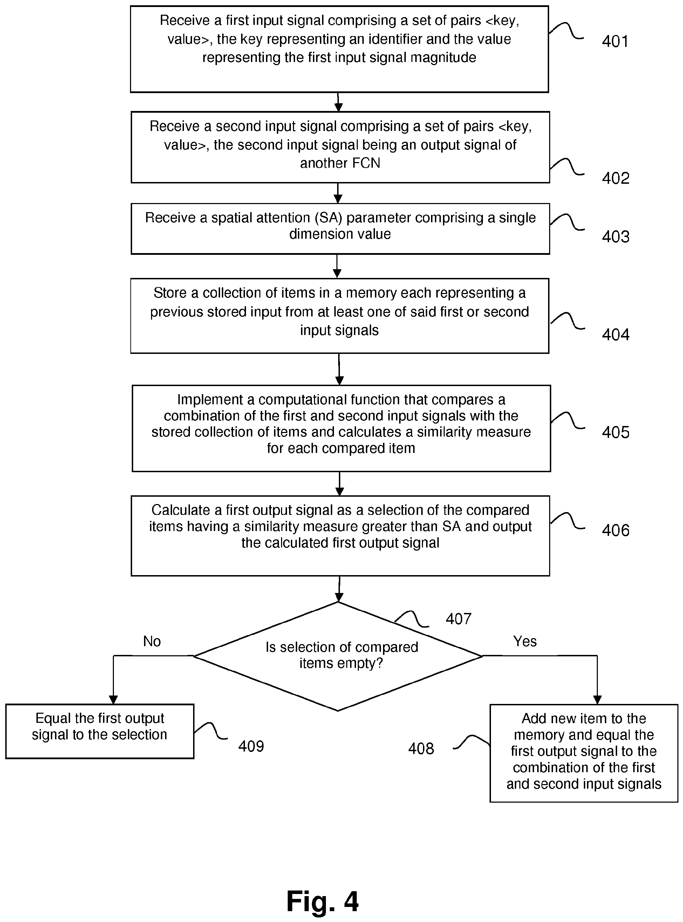

Fig. 4 is a flowchart illustrating a method for learning procedures, according to an embodiment of the present invention. At step 401, a first input of a computing node such as a FCN 100 receives a first input signal comprising a set of pairs <key, value>, the key representing an identifier and the value representing the first input signal magnitude. At step 402, a second input of the computing node 100, receives a second input signal comprising a set of pairs <key, value>, the second input signal being an output signal of another FCN 100. At step 403, a third input of the computing node 100 receives a SA parameter. The computing node 100 then, step 404, stores a collection of items in a memory thereof. Each item represents a previous stored input from at least one of said first or second input signals, and each item at least has a set of tuples <key, value>. At step 405 the computing node 100 implements a computational function for learning/recall procedures by comparing a combination of the first and second input signals with the stored collection of items and by calculating a similarity measure for each compared item. At step 406, a first output signal is calculated as a selection of the compared items having a similarity measure greater than a SA parameter. At step 407, it is check whether the selection of compared items is empty or not. If the selection of compared items is empty, a new item is added (step 408) to the memory and the first output signal is equaled to the combination of the first and second input signals. On the contrary, if the selection of compared items is not empty, the first output signal is equaled (step 409) to the selection.

The foregoing describes embodiments of the present invention and modifications, obvious to those skilled in the art can be made thereto, without departing from the scope of the present invention.

The scope of the present invention is defined in the following set of claims.

## Claims

1. A fractal cognitive computing node (FCN) for learning procedures, the FCN (100) comprising:
- a first input (111), configured to receive a first input signal, said first input signal comprising a set of pairs <key, value>, wherein the key representing an identifier and the value representing a magnitude of the first input signal;
- a first output (121), configured to provide a first output signal, said first output signal comprising a set of pairs <key, value>, wherein the key representing an identifier and the value representing the a magnitude of the first output signal;
- a second input (112), configured to receive a second input signal, said second input signal being a first output signal of another FCN (100) and comprising a set of pairs <key, value>, wherein the key representing an identifier and the value representing a magnitude of the second input signal;
- a third input (113), configured to receive a spatial attention, SA, parameter comprising a single dimension value;
- a memory, configured to store a collection of items, each item having a set of tuples <key, value>, and each item representing a previous stored input from at least one of said first or second input signals; and
- a processing unit, configured to implement a computational function that:
- compares a combination of said first and second input signals to some or all of the stored collection of items; and
- calculates a similarity measure for each compared item;
wherein said first output signal outputted via said first output (121) being calculated as a selection of the compared items having a similarity measure greater than said SA parameter;
wherein if the selection of compared items is empty, a new item is added to said memory and equals the first output signal to the combination of the first and second input signals; and
wherein if the selection of compared items is not empty, equals the first output signal to said selection.

2. The FCN of claim 1, further comprising a fourth input (114), configured to receive a temporal attention, TA, parameter comprising a single dimension value, wherein the processing unit being further configured to modify the values of any pair of items stored in the memory decreasing them by said TA parameter.

3. The FCN of previous claims, further comprising a fifth input (115), configured to receive a conditioning, CD, parameter comprising a single dimension value, wherein each item stored in the memory having a set of tuples <key, value, depth> and wherein the processing unit being further configured to modify the depth value of tuples for the selection of compared items by a magnitude defined as an addition or subtraction of the value of said CD parameter.

4. The FCN of previous claim, further comprising a second output (122), configured to provide a confidence, CF, parameter, the CF parameter being computed, by the processing unit, as a statistical grouping function over the similarity measures of said selection.

5. The FCN of previous claims, further comprising a third output (123), configured to provide a coherence, CH, parameter, the CH parameter being computed, by the processing unit, as a similarity measure between the second input signal and the first output signal.

6. The FCN of claim 2, further comprising a sixth input (116), configured to receive a focus parameter comprising a tuple <target, scope>, wherein the processing unit being further configured to modify the value of said set of tuples of at least one item of said collection of items selected by the target and scope values of the focus parameter.

7. The FCN of previous claims, wherein the first and second input signals and the first output signal being received/provided in sparse-distributed representation.

8. The FCN of previous claims, wherein the first input signal being received from another FCN or from a sensor.

9. The FCN of previous claims, wherein the FCN (100) being configured to be connected to at least another FCN forming a hierarchical structure.

10. A computer-implemented method for learning procedures, the method comprising:
receiving, by a first input of a computing node, a first input signal comprising a set of pairs <key, value>, the key representing an identifier and the value representing a magnitude of the first input signal;
receiving, by a second input of said computing node, a second input signal comprising a set of pairs <key, value>, the key representing an identifier and the value representing a magnitude of the second input signal, the second input signal being an output signal of another computing node;
receiving, by a third input of the computing node, a spatial attention, SA, parameter comprising a single dimension value;
storing, in a memory of the computing node, a collection of items, each item having a set of tuples <key, value> and each representing a previous stored input from at least one of said first or second input signals; and
implementing, by a processing unit of the computing node, a computational function that:
- compares a combination of said first and second input signals to some or all of the stored collection of items; and
- calculates a similarity measure for each compared item;
outputting, by an output of the computing node, a first output signal comprising a set of pairs <key, value>, the first output signal being calculated as a selection of the compared items having a similarity measure greater than said SA parameter;
wherein if the selection of compared items is empty, a new item is added to said memory and equals the first output signal to the combination of the first and second input signals, and
wherein if the selection of compared items is not empty, equals the first output signal to said selection.

11. The method of claim 10, further comprising:
receiving, by a fourth input of the computing node, a temporal attention, TA, parameter comprising a single dimension value; and
modifying, by the processing unit, the values of any pair of items stored in the memory decreasing them by said TA parameter.

12. The method of claim 10 or 11, further comprising:
receiving, by a fifth input of the computing node, a conditioning, CD, parameter comprising a single dimension value;
each item stored in the memory having a set of tuples <key, value, depth>; and
modifying, by the processing unit, the depth value of tuples for the selection of compared items by a magnitude defined as an addition or subtraction of the value of said CD parameter.

13. The method of claim 10, further comprising:
receiving, by a sixth input of the computing node, a focus parameter comprising a tuple <target, scope>; and
modifying, by the processing unit, the value of said set of tuples of at least one item of said collection of items selected by the target and scope values of the focus parameter.

14. The method of any of claims 10 to 13, further comprising:
computing, by the processing unit, a confidence, CF, parameter, as a statistical grouping function over the similarity measures of said selection; and
providing the computed CF parameter via a second output of the computing node.

15. The method of any of claims 10 to 14, further comprising:
computing, by the processing unit, a coherence, CH, parameter, as a similarity measure between the second input signal and the first output signal; and
providing the computed CH parameter via a third output of the computing node.

16. The method of any of claims 10 to 15, wherein the first and second input signals and the first output signal being received/provided in sparse-distributed representation, and wherein the first input signal being received from another FCN or from a sensor.
